# EUROPÄISCHE PATENTANMELDUNG

(11) **EP 3 609 240 A1**
(43) Veröffentlichungstag der Anmeldung: **12.02.2020**
(21) Anmeldenummer: 18188314.1
(22) Anmeldetag: 09.08.2018
(51) Int. Cl.: H04W 48/18

(54) **COMPUTERIMPLEMENTIERTES VERFAHREN UND NETZWERKZUGANGSSERVER ZUM VERBINDEN EINER NETZWERKKOMPONENTE MIT EINEM NETZWERK, INSBESONDERE EINEM MOBILFUNKNETZ, MIT EINEM ERWEITERTEN NETZWERKZUGANGSKENNZEICHEN**

(71) Anmelder: Siemens Aktiengesellschaft, 80333 München (DE)
(72) Erfinder: Falk, Rainer, 85586 Poing (DE)

(57) **Zusammenfassung**

Die Erfindung betrifft ein computerimplementiertes Verfahren zum Verbinden einer Netzwerkkomponente mit einem Netzwerk, insbesondere einem Mobilfunknetz, mit einem erweiterten Netzwerkzugangskennzeichen. Hierbei erfolgt ein Empfangen des erweiterten Netzwerkzugangskennzeichens von der Netzwerkkomponente durch einen Netzwerkzugangsserver, wobei das erweiterte Netzwerkzugangskennzeichen wenigstens eine Netzwerkzugangsrestriktion zum Verbinden der Netzwerkkomponente mit dem Netzwerk umfasst. Es erfolgt ein Empfangen eines angeforderten Benutzerzugangsprofils von einem Benutzerprofilserver durch den Netzwerkzugangsserver, wobei das Benutzerzugangsprofil Zugangsberechtigungen zum Verbinden der Netzwerkkomponente mit dem Netzwerk umfasst. Es wird die Netzwerkkomponente in dem Netzwerk durch den Netzwerkzugangsserver authentisiert, falls das empfangene erweiterte Netzwerkzugangskennzeichen die Zugangsberechtigungen des empfangenen Benutzerzugangsprofils erfüllt. Anschließend wird die Netzwerkverbindung der Netzwerkkomponente zu dem Netzwerk durch den Netzwerkzugangsserver, mittels der Zugangsberechtigungen des Benutzerzugangsprofils konfiguriert, sobald die Netzwerkkomponente authentisiert ist. Es erfolgt das Bestimmen der mit dem erweiterten Netzwerkzugangskennzeichen empfangenen Netzwerkzugangsrestriktion durch den Netzwerkzugangsserver und ein verifizieren der konfigurierten Netzwerkverbindung der Netzwerkkomponente zu dem Netzwerk durch den Netzwerkzugangsserver basierend auf der bestimmten Netzwerkzugangsrestriktion. Anschließend wird die Netzwerkkomponente mit dem Netzwerk durch den Netzwerkzugangsserver verbunden, sobald die konfigurierte Netzwerkverbindung verifiziert ist und die konfigurierte Netzwerkverbindung die bestimmten Netzwerkzugangsrestriktionen erfüllt.

## Beschreibung

Die vorliegende Erfindung betrifft ein computerimplementiertes Verfahren und einen Netzwerkzugangsserver zum Verbinden einer Netzwerkkomponente mit einem Netzwerk, insbesondere einem Mobilfunknetz, mit einem erweiterten Netzwerkzugangskennzeichen.

### Stand der Technik

Aus dem Stand der Technik sind das Dokument US 8,531,247 B2, das Dokument US 8,892,616 B2, das Dokument US 8,300,811 B2, das Dokument US 9,147,088 B2, das Dokument US 9584311 B2, das Dokument EP 2976707 B1, das Dokument EP 2 605 445 B1, das Dokument EP 2 870 565 A1, das Dokument EP 2 891 102 A1, das Dokument WO 2017137256 A1, das Dokument EP 2870565 B1, EP 2891266 B1, das Dokument EP 2961091 A1, das Dokument EP 2961093 A1, das Dokument EP 3028140 B1, das Dokument EP 2930610 B1, das Dokument EP 2940620 B1, das Dokument EP 2899714 A1, das Dokument EP 2981926 A0, das Dokument EP 3125492 B1, das Dokument EP17195125, das Dokument EP17211075, das Dokument EP18178316, das Dokument EP18156084, das Dokument EP18151345, das Dokument EP18167702, das Dokument EP18153594, das Dokument EP18162050, das Dokument EP18178498, das Dokument EP18152117, das Dokument EP18150133, das Dokument EP18169145, das Dokument EP17210647, das Dokument EP18150146, das Dokument EP18167486, das Dokument EP18168670, das Dokument EP18162049, das Dokument EP17203819, das Dokument EP18157168, das Dokument EP18169421, das Dokument EP17210253, das Dokument EP17205224, das Dokument EP18169269, das Dokument EP18169254, das Dokument EP17210288, das Dokument EP18153025, das Dokument EP17200614, das Dokument EP18156308, das Dokument EP17201758, das Dokument EP18156511, das Dokument EP18159485, das Dokument EP17203573, das Dokument EP 17175275, das Dokument EP17186826, das Dokument WO 2018069271 A1, das Dokument PCT/EP2017/082508, das Dokument EP17179823, das Dokument WO 2017050348 A1, das Dokument WO 2018068965 A1 und das Dokument US 8 843 761 B2 bekannt.

In heutigen Mobilfunknetzen werden unterschiedliche Netzwerkzugangskennzeichen (eng. NAI - Network Access Identifier) bei einem Netzwerkzugang verwendet, um einen Teilnehmer und dessen Netzwerkzugangsserver zu identifizieren. Die im Stand der Technik bekannten Netzwerkzugangskennzeichen haben die Form einer Email-Adresse, beispielsweise in der Form "user@realm". Das Netzwerkzugangszeichen ist ursprünglich für den Zugang zu einem Netzwerk über ein Modem und Telefonleitung entwickelt worden, wobei ein Benutzername und ein zugehöriges Passwort eingegeben und geprüft werden. Bei einer korrekten Eingabe wird man mit dem Internet oder einem Intranet verbunden. In dieser Form ist das Netzwerkzugangszeichen nicht mehr als ein Nutzername, der aus zwei Teilen aufgebaut gewesen ist, nämlich einem ersten Teil bestehend aus dem Nutzerteil, das durch ein @-Zeichen von dem zweiten Teil, nämlich dem Providernamen getrennt ist. Dies hat den Zweck, dass eine gleiche Struktur der Kennung zum Zugriff auf ein Netzwerk, von mehreren Providern gemeinsam genutzt werden kann.

Das damals einfache Netzzugangsverfahren wird heutzutage in weit komplexerer Form und in immer komplexeren Netzwerken verwendet, insbesondere im Mobilfunk. Beispielsweise werden in Mobilfunknetzen unterschiedlich gebildete Netzwerkzugangskennzeichen wie "Permanent User Identifier", "Pseudonym User Identifier", "Equipment Identifier" verwendet.

Hierbei ist bekannt geworden, dass man spezielle Informationen, beispielsweise Informationen über die Netzzugangsart, über die Art des Netzwerkes (so dass beispielsweise ein WLAN-Zugriff ermöglicht wird) und die eigene Teilnehmernummer (eng. International Mobile Subscriber Identity - IMSI), welche im Prinzip wie die Telefonnummer ist, in das Netzwerkzugangszeichen einkodieren kann.

Weiterhin kann die Mobilfunknetzkennzahl (eng. Mobile Network Code MNC) und der Mobilländercode (eng. Mobile Country Code MCC) in die "realm" des Netzwerkzugangszeichens einkodiert sein. Durch die Verwendung einer MNC-Kodierung und MCC-Kodierung ist es möglich, den Mobilfunkbetreiber eines Teilnehmers zu erkennen, wodurch die Mobilfunkbetreiber voneinander unterscheidbar sind. Die verschiedenen Formen der Einwahl in ein fremdes Netz ohne Berücksichtigung der Infrastruktur wird durch das erweiterbare Authentifizierungsprotokoll (eng. Extensible Authentication Protocol EAP) geschaffen.
- Ein erstes Beispiel für ein Netzwerkzugangskennzeichen ist:
   "wlan.mnc01.mcc262.3gppnetwork.org"
   In diesem ersten Beispiel wird durch "WLAN" die Art des vom Nutzer verwendeten Zugangs codiert, hier beispielsweise das WLAN.
   "MNC01" gibt den Provider an, etwa beispielsweise die Telekom AG.
   "MCC262" gibt die Länderkennung an, beispielsweise Deutschland.
   "3gppnetwork.org" beschreibt den Standard, nachdem das Netzwerkzugangskennzeichen erstellt wird, wodurch dieses Netzwerkkennzeichen eindeutig der 3gpp.org zugeordnet werden kann und Kollisionen mit anderen Netzwerkkennzeichen vermieden werden.
- Ein zweites Beispiel für ein Netzwerkzugangskennzeichen ist:
   Pseudo-Code:
      "0<IMSI>@wlan.mnc<MNC>.mcc<MCC>.3gppnetwork.org"
   Beispiel:
      0234150999999999@wlan.mnc01.mcc262.3gppnetwork.org

In diesem Beispiel wird durch den Platzhalter "<IMSI>" ein Kennzeichen beschrieben, das einem Mobilfunkteilnehmer (Teilnehmerkennung) eindeutig zugeordnet ist und das auf einer SIM-Karte abgelegt ist. Durch dieses Kennzeichen ist der Nutzer nach der Anmeldung im Mobilnetz eindeutig identifizierbar.

Bei nicht eingelegter SIM-Karte ist keine eindeutige Teilnehmerkennung verfügbar, wobei in diesem Fall die Gerätenummer "<IMEI>" statt der Teilnehmerkennung verwendet werden kann.
- Ein drittes Beispiel für ein Netzwerkzugangskennzeichen ist:
   Pseudo-Code:
      "wlan.mnc<homeMNC>.mcc<MCC>.3gppnetwork.org !0<IMSI>@wlan.mnc<visitedMNC>.mcc<vistedMCC>.3gppnetwork .org"
   Beispiel:
      wlan.mnc01.mcc262.3gppnetwork.org!0234150999999999@wlan. mnc071.mcc610.3gppnetwork.org

In diesem Beispiel wird durch den Platzhalter "<homeMNC>" ein Kennzeichen beschrieben, das den Vertragspartner beschreibt, bei dem der Mobilfunkvertrag abgeschlossen und die SIM-Karte ausgestellt wurde. Durch den Platzhalter "<visitedMNC>" wird der Mobilfunkbetreiber beschrieben, bei dessen Netz sich ein Netzer eingewählt hat. Dies ist beispielsweise der Fall, wenn sich ein Mobilfunkteilnehmer mit einer SIM-Karte eines deutschen Providers in ein Mobilfunknetz im Ausland einwählt.

Die oben genannten Beispiele dienen einer beispielhaften Erläuterung und Veranschaulichung des Aufbaus eines Netzwerkzugangskennzeichens und stellen keine Beschränkung dessen für die vorliegende Erfindung dar.

Zukünftige Mobilfunknetze, beispielsweise das 5G-Netz, unterstützen eine weitaus höhere Flexibilität bezüglich unterschiedlicher Nutzungsszenarien, als derzeit in Verwendung befindliche Mobilfunknetze.

Es ist vorgesehen, das 5G-Netz auch für kritische und/oder industrielle Geräte und Steuerungssysteme einzusetzen. Hierbei sind unter kritischen Geräten beispielsweise Robotersysteme und deren Steuerungen mit speziellen Sicherheitsanforderungen und/oder Echtzeitanforderungen oder Fabrik- und Fertigungsautomatisierungen mit speziellen Sicherheits- und Echtzeitanforderungen zu verstehen. Zusätzlich werden spezielle Anforderungen an das Patchen der Geräte im industriellen Umfeld gestellt. Es ist bei vielen der verwendeten Geräte im industriellen Umfeld davon auszugehen, dass die von diesen Geräten verwendete Software nicht dazu ausgelegt ist, gepatcht zu werden bzw. sie nicht gepatcht ist. Diesbezüglich stellt sich das Problem, dass Geräte mit einer veralteten Softwareversion und bekannten Schwachstellen beispielsweise über das 5G-Netz mit dem öffentlichen Netzwerk (z.B. Internet) verbunden werden würden, obwohl diese Geräte aufgrund der Schwachstellen hierfür nicht geeignet sind und somit die Gefahr einer Manipulation von außerhalb über das öffentlich Netzwerk durch nicht autorisierte Dritte besteht.

Unter dem Begriff "patchen" ist das Ausbessern bzw. Nachbessern einer alten Softwareversion zu verstehen, bei der eine neue Softwareversion installiert wird, um beispielsweise erkannte Probleme bzw. Schwachstellen zu bereinigen. Ein Patchen bedarf dabei keiner vollständigen Neuinstallation der Software, sondern kann auch eine ergänzende Softwareinstallation umfassen. Es ist jedoch auch möglich, eine Firmware eines Gerätes zu aktualisieren, um Schwachstellen zu bereinigen.

Ein nicht durchgeführtes Patchen von Software bei Geräten im industriellen Umfeld ist auf unterschiedliche Gründe, im speziellen auf betrieblich Gründe zurück zu führen. So bedarf eine Softwareänderung/Softwareerneuerung an einem Gerät ein Wartungsfenster, um nicht den Betrieb einer Anlage im industriellen Umfeld durch das Einspielen und Testen neuer Software zu stören bzw. zu unterbrechen.

Zudem bedarf es gerade bei einer Gerätesoftware mit einer Sicherheitszulassung nach dem Einspielen einer neuen Software eine erneute Qualifizierung und eines Zulassungsprozesses für die Verwendung des Gerätes mit der neuen Gerätesoftware. Dies kann zu einem erhöhten Kosten- und Zeitaufwand führen. Diesbezüglich wird bei Geräten im industriellen Umfeld auf eine Aktualisierung und somit auf das Patchen der Gerätesoftware weitestgehend verzichtet, oder es wird die Gerätesoftware erst stark zeitverzögert aktualisiert. Hierdurch erhöhen sich die Risiken einer Manipulation der Geräte über bekannte Schwachstellen bei einem Verbinden mit einem öffentlichen Netzwerk über das 5G-Netz.

Damit sichergestellt werden kann, dass Geräte, die Echtzeit- oder Sicherheitseigenschaften haben und zusätzlich Schwachstellen aufweisen können, bei einem Verbinden mit einem 5G-Netz im industriellen Umfeld keiner Manipulation oder Zerstörung durch Zugriff Dritter über ein öffentliches Netzwerk ausgesetzt werden, ist es notwendig, mit hoher Verlässlichkeit die Konnektivität zu dem 5G-Netz zu steuern.

Bekannte Lösungen sehen diesbezüglich eine eingeschränkte Zugangsberechtigung in den auf dem Benutzerprofilserver hinterlegten Benutzerprofilen vor. Dies ist aber fehleranfällig und mit einem hohen Aufwand verbunden, da die Änderungen der Zugangsberechtigung von dem Netzbetreiber netzwerkkomponentenspezifisch, das heißt für jede Netzwerkkomponente separat, vorgenommen werden müssen.

Es besteht daher ein Bedarf nach einem computerimplementierten Verfahren zum Verbinden einer Netzwerkkomponente mit einem Netzwerk, insbesondere einem Mobilfunknetz, mit einem erweiterten Netzwerkzugangskennzeichen.

Insbesondere besteht ein Bedarf an einem Netzwerkzugangsserver zum Verbinden einer Netzwerkkomponente mit einem Netzwerk, insbesondere einem Mobilfunknetz, mit einem erweiterten Netzwerkzugangskennzeichen.

Die vorliegende Erfindung schafft ein computerimplementiertes Verfahren zum Verbinden einer Netzwerkkomponente mit einem Netzwerk, insbesondere einem Mobilfunknetz, mit einem erweiterten Netzwerkzugangskennzeichen mit den Merkmalen des Patentanspruchs 1 und einen Netzwerkzugangsserver mit den Merkmalen des Patentanspruchs 11.

Demnach schafft die Erfindung ein computerimplementiertes Verfahren zum Verbinden einer Netzwerkkomponente mit einem Netzwerk, insbesondere einem Mobilfunknetz, mit einem erweiterten Netzwerkzugangskennzeichen, mit einem Schritt zum Empfangen des erweiterten Netzwerkzugangskennzeichens von der Netzwerkkomponente durch einen Netzwerkzugangsserver, wobei das erweiterte Netzwerkzugangskennzeichen wenigstens eine Netzwerkzugangsrestriktion zum Verbinden der Netzwerkkomponente mit dem Netzwerk umfasst. Das Verfahren umfasst ferner ein Empfangen eines angeforderten Benutzerzugangsprofils von einem Benutzerprofilserver durch den Netzwerkzugangsserver, wobei das Benutzerzugangsprofil Zugangsberechtigungen zum Verbinden der Netzwerkkomponente mit dem Netzwerk umfasst. Weiterhin umfasst das computerimplementierte Verfahren ein Authentisieren der Netzwerkkomponente in dem Netzwerk durch den Netzwerkzugangsserver, falls das empfangene erweiterte Netzwerkzugangskennzeichen die Zugangsberechtigungen des empfangenen Benutzerzugangsprofils erfüllt. Ferner umfasst das Verfahren ein Konfigurieren der Netzwerkverbindung der Netzwerkkomponente zu dem Netzwerk durch den Netzwerkzugangsserver, mittels der Zugangsberechtigungen des Benutzerzugangsprofils, sobald die Netzwerkkomponente authentisiert ist. Zudem umfasst das Verfahren ein Bestimmen der mit dem erweiterten Netzwerkzugangskennzeichen empfangenen Netzwerkzugangsrestriktion durch den Netzwerkzugangsserver. Das Verfahren umfasst ferner ein Verifizieren der konfigurierten Netzwerkverbindung der Netzwerkkomponente zu dem Netzwerk durch den Netzwerkzugangsserver basierend auf der bestimmten Netzwerkzugangsrestriktion. Zudem umfasst das Verfahren ein Verbinden der Netzwerkkomponente mit dem Netzwerk durch den Netzwerkzugangsserver, sobald die konfigurierte Netzwerkverbindung verifiziert ist und die konfigurierte Netzwerkverbindung die bestimmten Netzwerkzugangsrestriktionen erfüllt. Es ist möglich, dass ein erweitertes Netzwerkzugangskennzeichen eine einzelne oder eine Mehrzahl von Netzwerkzugangsrestriktionen umfasst.

Hierbei umfassen Netzwerkkomponenten Geräte, insbesondere Computer, Server, Geräte mit Mikrokontroller und Speicher, Geräte im industriellen Umfeld, beispielsweise Automatisierungs- und Steuerungstechnik und Robotik sowie industrielle IoT-Geräte (IoT: Internet of Things / Internet der Dinge), die mit dem Netzwerk verbunden sind. Diese beispielhafte Auflistung stellt keine für sich abschließende Auflistung dar. Vielmehr sind noch weitere nicht genannte Geräte, welche in industriellen Anwendung Verwendung finden und die mit einem Netzwerk über ein Modem und/oder Netzwerkkarte und/oder Kommunikationsmodul verbunden werden können, zu der beispielhaften Auflistung zu ergänzen.

Dabei ist unter einem Netzwerk ein System zu verstehen, das aus einer Menge von Elementen besteht und dessen Elemente untereinander mittels Verbindungen miteinander verbunden sind. Insbesondere ist das Netzwerk ein Mobilfunknetz gemäß dem 5G Standard.

Unter einem erweiterten Netzwerkzugangskennzeichen ist ein Netzwerkkennzeichen zu verstehen, das eine Netzwerkzugangsrestriktion umfasst.

Unter einer Zugangsberechtigung sind die zwischen einem Netzteilnehmer und dem Netzbetreiber vereinbarten Parameter einer Netznutzung zu verstehen. Diese können beispielsweise ein Prioritätszugriffsrecht auf das Netzwerk und bestimmte Dienstgüteparameter (Quality of Service QoS), wie beispielsweise Bandbreite, Datenvolumen usw. umfassen.

Unter einem Benutzerprofilserver ist ein Server zu verstehen, der beispielsweise ein mit dem Netzwerk verbundener Computer ist, beispielsweise ein AAA-Server (Authentisierung Autorisierung Accounting), ein HSS-Server (Home Subscriber Server), ein UPS-Server (User Profile Server), auf dem das Nutzerprofil des Netzteilnehmers hinterlegt ist.

Weiterhin schafft die Erfindung gemäß einem weiteren Aspekt einen Netzwerkzugangsserver zum Konfigurieren einer Netzwerkverbindung zum Verbinden einer Netzwerkkomponente mit einem Netzwerk, insbesondere einem Mobilfunknetz, mit einem erweiterten Netzwerkzugangskennzeichen, umfassend zumindest eine Schnittstelle, welche dazu ausgebildet ist, das erweiterte Netzwerkzugangskennzeichen von einer Netzwerkkomponente und ein Benutzerzugangsprofil von einem Zugangsprofilserver zu empfangen, wobei das erweiterte Netzwerkzugangskennzeichen wenigstens eine Netzwerkzugangsrestriktion für das Verbinden der Netzwerkkomponente mit dem Netzwerk umfasst und wobei das Netzwerkzugangsprofil Zugangsberechtigungen zum Verbinden der Netzwerkkomponente mit dem Netzwerk umfasst.

Ferner umfasst der Netzwerkzugangsserver zumindest eine Prozessoreinheit, welche dazu ausgebildet ist, die Netzwerkkomponente in dem Netzwerk zu authentisieren, falls das empfangene erweiterte Netzwerkzugangskennzeichen die Zugangsberechtigungen des empfangenen Benutzerzugangsprofils erfüllt, die Netzwerkverbindung der Netzwerkkomponente zu dem Netzwerk mittels der Zugangsberechtigung des Benutzerzugangsprofils zu konfigurieren, sobald die Netzwerkkomponente authentisiert ist, die mit dem erweiterten Netzwerkzugangskennzeichen empfangene Netzwerkzugangsrestriktion zu bestimmen, die konfigurierte Netzwerkverbindung der Netzwerkkomponente zu dem Netzwerk basierend auf der bestimmten Netzwerkzugsrestriktion zu verifizieren, die Netzwerkkomponente mit dem Netzwerk zu verbinden, sobald die konfigurierte Netzwerkverbindung verifiziert ist.

Zudem ist gemäß einem weiteren Aspekt der Erfindung eine Verwendung eines Netzwerkzugangsservers gemäß der vorliegenden Erfindung vorgesehen, der insbesondere geeignet zur Durchführung eines Verfahrens gemäß der vorliegenden Erfindung, zum Verbinden einer Netzwerkkomponente mit einem Netzwerk ist.

Ferner ist gemäß einem weiteren Aspekt der Erfindung ein Computerprogrammprodukt mit einem auf einem maschinenlesbaren Träger gespeicherten Programmcode zur Durchführung eines Verfahrens gemäß der vorliegenden Erfindung vorgesehen.

Der vorliegenden Erfindung liegt die Erkenntnis zugrunde, dass mit einem erweiterten Netzwerkzugangskennzeichen, eine Netzwerkkomponente Eigenschaften von einem Netzwerk bzw. Einschränkungen eines Netzwerkzugangs anfordern kann.

In herkömmlichen Netzen besteht ein Ziel darin, dass die mit einem Netzwerk zu verbindende Netzwerkkomponente den bestmöglichen Zugang zum Netzwerk erhält. Die Zugangsberechtigung und Parameter (Priorität und QoS-Parameter) sind in dem Benutzerzugangsprofil hinterlegt.

Vorteilhafterweise kann durch ein entsprechend kodiertes Netzwerkzugangskennzeichen und dessen Verarbeitung durch einen Netzwerkzugangsserver dem Netzwerkzugangsserver signalisiert werden, dass die Netzwerkkomponente nur über einen bestimmten Zugang zum Netzwerk verbunden werden soll. Die Netzwerkkomponente soll somit nicht über den bestmöglichen Zugang mit dem Netzwerk verbunden werden, sondern die Netzwerkkomponente stellt über den Netzwerkzugangsserver explizit sicher, dass nur ein gemäß den Anforderungen entsprechend, gegebenenfalls, eingeschränkter Zugang zu einem Netzwerk aufgebaut wird.

Dies ist beispielsweise in Industrie 4.0 Szenarien vorteilhaft, bei dem eine Netzwerkkomponente nur mit einem virtuellen lokalen Steuerungsnetzwerk verbunden werden soll, aber nicht mit einem öffentlichen Netzwerk, beispielsweise dem Internet. Dies ist speziell bei Geräten erforderlich, auf denen nicht zeitnah Patches eingespielt werden können. Hier muss mit hoher Verlässlichkeit gewährleistet werden, dass eine solche Netzwerkkomponente sich nur mit einem Teilnetz verbinden kann, das für diese Netzwerkkomponente auch vorgesehen ist.

In vorteilhafter Weise kann eine Netzwerkkomponente während des Authentisierungsprozesses dem Mobilfunknetz selbst signalisieren, dass es nur einen eingeschränkten Netzwerkzugang verwenden möchte. Dadurch kann fest vorgegeben werden oder durch eine geeignete Netzwerkkomponenten-Konfiguration sichergestellt werden, dass eine Netzwerkkomponente nicht "versehentlich" mit einem ungeeigneten Netzwerk verbunden wird.

Vorteilhafterweise wird durch die vorliegende Erfindung das Netzwerkverbindungsregelwerk nicht durch den Netzbetreiber definiert, sondern vielmehr verbindet sich eine Netzwerkkomponente nur mit dem Netzwerk, wenn die im Netzwerkzugangskennzeichen geforderten Netzwerkzugangsrestriktion durch den Netzbetreiber erfüllt wird.

Weiterhin vorteilhaft ist, dass Netzwerkkomponenten durch das erweiterte Netzwerkzugangskennzeichen umfassend Netzwerkzugangsrestriktion den Zugang zu einem Netzwerk für sich selbst beschränken können. Der Netzbetreiber kann einen Netzzugang zu einem Netzwerk mit definierten Parametern bereitstellen, wobei sich die Netzwerkkomponente in ihrem Zugriff beschränken kann, um somit die Sicherheitsanforderungen zu erfüllen.

Weitere Merkmale und Vorteile der Erfindung sind in den Unteransprüchen beschrieben.

Gemäß einer Ausführungsform umfasst das Verfahren den Schritt des Konfigurierens einer eingeschränkten Netzwerkverbindung der Netzwerkkomponente zum Netzwerk durch den Netzwerkzugangsserver, mittels der Zugangsberechtigungen des Benutzerzugangsprofils und der Netzwerkzugangsrestriktion des empfangenen erweiterten Netzwerkzugangskennzeichens.

Ferner umfasst das Verfahren ein Verbinden der Netzwerkkomponente mit dem Netzwerk durch den Netzwerkzugangsserver, sobald die eingeschränkte Netzwerkverbindung der Netzwerkkomponente zu dem Netzwerk durch den Netzwerkzugangsserver konfiguriert wird.

Vorteilhafterweise kann somit eine eingeschränkte Netzwerkverbindung der Netzwerkkomponente zu dem Netzwerk konfiguriert werden, wenn die bestehende Netzwerkverbindung nach der Authentifizierung zum Netzwerk die geforderte Netzwerkzugangsrestriktion und somit die geforderte Einschränkung nicht erfüllt. Andernfalls wird ein Aufbau einer Netzwerkverbindung unterbunden und die Anforderung, des Nicht-Verbindens einer Netzwerkkomponente mit einem Netzwerk, dass nicht die Netzwerkzugangsrestriktion umfasst, erfüllt.

Gemäß einer Ausführungsform umfasst die Netzwerkzugangsrestriktion ein Identifikationsmerkmal für das Verbinden der Netzwerkkomponente mit einem Netzwerk-Slice in dem Netzwerk.

Unter einem Netzwerk-Slice ist ein virtuelles logisches Netzwerk zu verstehen, das auf der Basis einer bestehenden gleichen Netzwerkinfrastruktur aufgesetzt ist. Vorteilhafterweise müssen für ein echtzeitfähiges Netzwerk und/oder für ein Netzwerk mit hohem Datendurchsatz keine verschiedenen Netzwerke physikalisch aufgebaut werden, sondern es wird vielmehr eine gemeinsame Infrastruktur, beispielsweise eine 5G Infrastruktur genutzt. In dieser gemeinsamen 5G Infrastruktur können logische Netzwerk-Slices definiert werden, mit der eine Netzwerkverbindung zu einer Netzwerkkomponente aufgebaut werden kann.

Gemäß einer Ausführungsform weist der Netzwerk-Slice einen Betriebszustand auf.

Vorteilhafterweise können die logischen Netzwerk-Slices einen Betriebszustand aufweisen. Beispielsweise kann ein Netzwerk-Slice als Betriebszustand für eine Echtzeitkontrolle in einem industriellen Sicherheitsumfeld oder speziell definierte Betriebszustände, bei denen eine bestimmte Dienstgüte (Quality of Service) aus Netzwerksicht, wie beispielsweise Datendurchsatz, Delay, Jitter, Verarbeitung usw. garantiert ist, umfassen.

Gemäß einer Ausführungsform umfasst die Netzwerkzugangsrestriktion ein Identifikationsmerkmal zum Verbinden der Netzwerkkomponente mit einem Teilnetzwerk des Netzwerk-Slices in dem Netzwerk.

Vorteilhafterweise kann ein Netzwerk-Slice zweistufig aufgebaut sein, sodass ein Netzwerk-Slice in weitere Teilnetzwerke unterteilt werden kann. Dies hat den Vorteil, dass die Anzahl der durch Netzbetreiber unterstützten Netzwerk-Slices nicht beliebig groß wird. Sofern eine bestimmte Spezialisierung notwendig ist, kann aus einem bestehenden Netzwerk-Slice, logisch ein Bereich für die Spezialisierung reserviert werden. Dies verringert die Anzahl der Netzwerk-Slices und ermöglicht eine einfachere und schnellere Verwaltung dieser Netzwerk-Slices.

Gemäß einer Ausführungsform umfasst die Netzwerkzugangsrestriktion ein Identifikationsmerkmal zum Verbinden der Netzwerkkomponente mit einer Netzwerk-Zone in dem Netzwerk.

Unter einer Netzwerk-Zone ist eine strukturierte Zuordnung von Netzwerkkomponenten zu verstehen, die in einem gemeinsamen örtlichen Bereich liegen, oder beispielsweise eine gemeinsame Anforderung an Echtzeit oder Überwachung aufweisen. Auch aus Planungs- und Sicherheitsaspekten heraus, werden verschiedene Netzwerkkomponenten zu einer gemeinsamen Netzwerk-Zone zugeordnet und durch beispielsweise eine Firewall voneinander getrennt, mit einem gemeinsamen Netzwerk verbunden.

In einem 5G-Netz wird die Netzwerk-Zonenzuordnung logisch realisiert, um drahtlos angebundene Netzwerkkomponenten zu einer Netzwerk-Zone zuordnen zu können. Hierdurch kann eine Netzwerkverbindung zu einer Netzwerkkomponente in einem Netzwerk nur mit einem Gerät der eigenen Netzwerk-Zone aufgebaut werden, jedoch nicht mit anderen Geräten.

Gemäß einer Ausführungsform umfasst die Netzwerkzugangsrestriktion einen Betriebszustand eines Netzwerk-Slices oder eines Teilnetzwerks des Netzwerk-Slices.

Vorteilhafterweise können in der Praxis Netzwerk-Slices, ein Netzwerk-Slice mit zumindest einem Subnetz, beispielsweise für eine Echtzeitanforderung, für eine Überwachungsanforderung oder für eine Sicherheitsanforderung umfassen. Zusätzlich kann zu der logischen Netzwerk-Slice - Zuordnung noch kodiert werden, dass die Netzwerkverbindung beispielsweise für eine Echtzeitanforderung oder Sicherheitsanforderung vorgesehen ist. Vor dem Aufbau einer Netzwerkverbindung erfolgt eine Prüfung des zu verbindenden Netzwerk-Slices dahingehend, ob dieser eine Markierung, beispielsweise ein Label für Echtzeitanforderung aufweist. Bei entsprechender Übereinstimmung des geforderten und des gelieferten Labels erfolgt der Aufbau einer Netzwerkverbindung. Andernfalls wird die Netzwerkverbindung blockiert.

Weiterhin vorteilhaft ist, dass der Betriebszustand eine Zweckangabe darstellen kann, welche beispielsweise über eine Zeichenfolge enthaltend eine Bitfolge oder ein Label angegeben ist. Während der Verifizierung wird geprüft, ob beispielsweise die Zuordnung eines Labels mit dem Netzwerk-Slice, mit dem eine Netzwerkverbindung hergestellt werden soll, zulässig und/oder kompatibel ist. Der erzielte Vorteil dabei ist, dass eine Netzwerkverbindung nur gewährt bzw. konfiguriert wird, wenn die Zuordnung zulässig und/oder kompatibel ist.

Gemäß einer Ausführungsform umfasst die Netzwerkzugangsrestriktion einen kryptografischen Schutz.

Unter einem kryptografischen Schutz ist ein kryptografischer Algorithmus zu verstehen, der eine "Cipher Suite Option" umfasst. Eine "Cipher Suite Option" umfasst einen Basisalgorithmus, wie beispielsweise den AES128, der in unterschiedliche Betriebsarten/Verwendungsarten (z.B. GCM - Galois Counter Mode, CMAC - Cipher-based Message Authentication Code), die den gleichen Basisalgorithmus verwenden, unterteilt ist. "Cipher Suite" bezeichnet insbesondere das Sicherheitsprotokoll und die Variante des ausgewählten kryptografischen Schutzes.

Der kryptografische Schutz von Netzwerkverbindungen in einem Netzwerk wird durch den Netzbetreiber konfiguriert. Der durch die Netzwerkzugangsrestriktion dabei erzielte Vorteil hinsichtlich eines kryptografischen Schutzes besteht darin, dass für den Fall, dass die von dem Netzbetreiber bereitgestellten Schutzvarianten nicht den Anforderungen den kritischen Anforderungen der Geräte in einem industriellen Umfeld entsprechen sollten, keine Netzwerkverbindung zwischen den Geräten und dem Netzwerk aufgebaut wird.

Gemäß einer Ausführungsform ist das Netzwerkzugangskennzeichen ein zweistufiges Netzwerkzugangskennzeichen.

Gemäß einer Ausführungsform umfasst das zweistufige Netzwerkzugangskennzeichen, in einer ersten Stufe eine Netzwerkzugangsrestriktion und in einer zweiten Stufe eine weitere Netzwerkzugangsrestriktion.

Vorteilhafterweise können für das Netzwerkzugangskennzeichen zwei verschiedene Netzwerkzugangsrestriktionen verwendet werden, welche nebeneinander stehen und in einer ersten Stufe (äußeres Netzwerkzugangskennzeichen) Netzwerkzugangsrestriktion und in einer zweiten Stufe (inneres Netzwerkzugangskennzeichen) Netzwerkrestriktion und somit zwei separate Informationen (Einschränkungen) umfassen. Der erzielte Vorteil ist, dass bei der Verwendung von zweistufige Netzwerkzugangskennzeichen, die durch die äußere Stufe kodierte Beschränkung und die durch die innere Stufe kodierte Beschränkung auf Übereinstimmung geprüft werden können. Bei fehlender Übereinstimmung wird keine Netzwerkverbindung aufgebaut.

In einer weiteren Ausführungsform werden effektive Netzwerkzugangsrestriktionen als logische Vereinigungsmenge der Beschränkung des äußeren Netzwerkzugangskennzeichen und des inneren Netzwerkzugangskennzeichen bestimmt. Dies bietet den Vorteil, dass eine Netzwerkverbindung sowohl die Beschränkungen, die durch das äußere Netzwerkzugangskennzeichen kodiert sind, als auch die Beschränkungen, die durch das innere Netzwerkzugangskennzeichen kodiert sind, erfüllen muss. Wird eine der beiden Beschränkungen nicht erfüllt, erfolgt kein Aufbau einer Netzwerkverbindung, unabhängig von dem Wissen ob eine in dem inneren oder äußeren Netzwerkzugangskennzeichen angegebene Beschränkung nicht erfüllt wird.

Zweckmäßigerweise ist die Prozessoreinheit weiter ausgebildet, eine eingeschränkte Netzwerkverbindung der Netzwerkkomponente zu dem Netzwerk mittels der Zugangsberechtigungen des Benutzerzugangsprofils und der Netzwerkzugangsrestriktion des empfangenen erweiterten Netzwerkzugangskennzeichens zu konfigurieren und die Netzwerkkomponente mit dem Netzwerk zu verbinden, sobald die eingeschränkte Netzwerkverbindung der Netzwerkkomponente zu dem Netzwerk konfiguriert ist.

Der erzielte Vorteil dabei ist, dass die konfigurierte Netzwerkverbindung die Netzwerkzugangsrestriktion des Netzwerkzugangskennzeichens erfüllt und somit eine Netzwerkverbindung gemäß den Anforderungen der Netzwerkkomponente an beispielsweise Echtzeit oder Sicherheit gewährleistet wird.

Die vorliegende Erfindung wird nachfolgend anhand der in den schematischen Figuren der Zeichnungen angegebenen Ausführungsbeispiele näher erläutert, wobei darauf hingewiesen wird, dass durch diese Beispiele Abwandlungen beziehungsweise Ergänzungen, wie sie sich für den Fachmann unmittelbar ergeben, mit umfasst sind. Darüber hinaus stellen diese Ausführungsbeispiele keine Beschränkungen der Erfindung in der Art dar, dass Abwandlungen und Ergänzungen im Umfang der vorliegenden Erfindung liegen.

Es zeigen:
- Fig. 1:: eine schematische Darstellung eines computerimplementierten Verfahrens zum Verbinden einer Netzwerkkomponente mit einem Netzwerk, insbesondere einem Mobilfunknetz, unter Verwendung eines erweiterten Netzwerkzugangskennzeichen gemäß einer Ausführungsform;
- Fig. 2:: eine schematische Darstellung einer Netzwerkverbindung in einem Netzwerk mit einer konfigurierten Netzwerkverbindung;
- Fig. 3:: eine schematische Darstellung einer Netzwerkverbindung in einem Netzwerk mit einer konfigurierten Netzwerkverbindung;
- Fig. 4:: eine schematische Darstellung eines Netzwerkzugangsservers zum Verbinden einer Netzwerkkomponente mit einem Netzwerk, insbesondere einem Mobilfunknetz, unter Verwendung eines erweiterten Netzwerkzugangskennzeichen gemäß einer Ausführungsform;
- Fig. 5:: eine schematische Darstellung eines computerlesbaren Speichermediums umfassend ausführbaren Programmcode gemäß einer Ausführungsform;
- Fig. 6:: eine schematische Darstellung eines zeitlichen Ablaufs eines Aufbaus einer Netzwerkverbindung gemäß einer Ausführungsform;
- Fig. 7:: eine schematische Darstellung eines zeitlichen Ablaufs eines Aufbaus einer Netzwerkverbindung gemäß einer weiteren Ausführungsform.

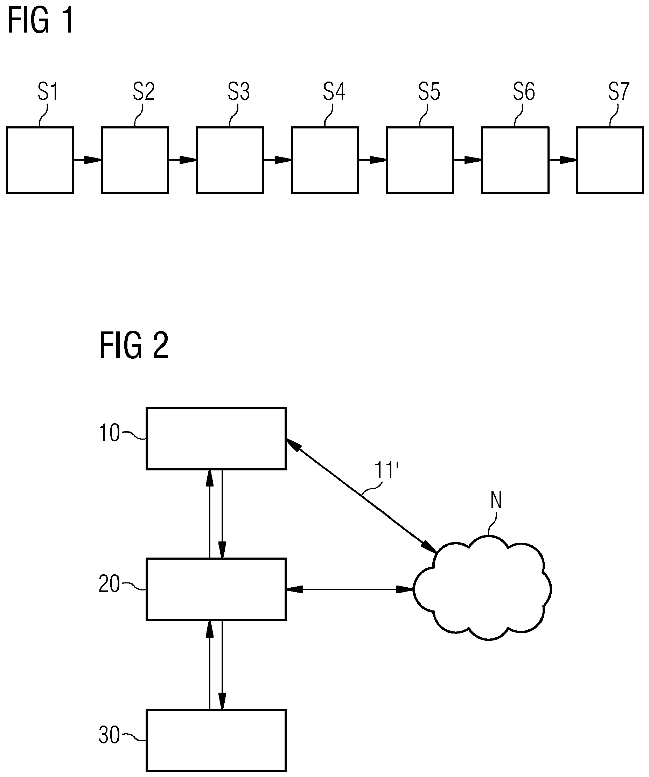

Figur 1 zeigt eine schematische Darstellung eines computerimplementierten Verfahrens zum Verbinden einer Netzwerkkomponente 10 mit einem Netzwerk N, insbesondere mit einem Mobilfunknetz, wobei eines erweiterten Netzwerkzugangskennzeichen gemäß einer Ausführungsform verwendet wird. Die Netzwerkkomponente 10 umfasst Geräte insbesondere Computer, Handhelds, Server, Geräte mit Mikrokontroller und Speicher, sowie Geräte im industriellen Umfeld, beispielsweise Automatisierungs- und Steuerungstechnik, Robotik sowie industrielle IoT-Geräte (I-oT: Internet of Things / Internet der Dinge), umfassen, die über Modem und/oder eine Netzwerkkarte und/oder Kommunikationsmodul mit einem Netzwerk verbunden werden können. Zudem umfasst das Netzwerkkennzeichen der Netzwerkkomponente 10 Netzwerkzugangsrestriktion, um Eigenschaften bzw. Einschränkungen der Netzwerkverbindung anzufordern.

In einem ersten Schritt S1 erfolgt das Empfangen eines erweiterten Netzwerkzugangskennzeichens einer der Netzwerkkomponenten 10 durch einen Netzwerkzugangsserver 20. Das erweiterte Netzwerkzugangskennzeichen umfasst wenigstens eine Netzwerkzugangsrestriktion zum Verbinden der Netzwerkkomponente 10 mit dem Netzwerk N.

In einem weiteren Schritt S2 erfolgt das Empfangen eines angeforderten Benutzerzugangsprofils von einem Benutzerprofilserver 30 durch den Netzwerkzugangsserver 20, wobei das Benutzerzugangsprofil Zugangsberechtigungen zum Verbinden der Netzwerkkomponente 10 mit dem Netzwerk N umfasst.

In einem folgenden Schritt S3 erfolgt das Authentisieren der Netzwerkkomponente 10 in dem Netzwerk N durch den Netzwerkzugangsserver 20, falls das empfangene erweiterte Netzwerkzugangskennzeichen die Zugangsberechtigungen des empfangenen Benutzerzugangsprofils erfüllt.

In einem weiteren Schritt S4 erfolgt das Konfigurieren der Netzwerkverbindung 11' der Netzwerkkomponente 10 zu dem Netzwerk N durch den Netzwerkzugangsserver 20, mittels der Zugangsberechtigungen des Benutzerzugangsprofils, sobald die Netzwerkkomponente 10 authentisiert ist.

In einem folgenden Schritt S5 erfolgt das Bestimmen der mit dem erweiterten Netzwerkzugangskennzeichen wenigstens einen empfangenen Netzwerkzugangsrestriktion durch den Netzwerkzugangsserver 20.

In einem weiteren Schritt S6 erfolgt das Verifizieren der konfigurierten Netzwerkverbindung 11' der Netzwerkkomponente 10 zu dem Netzwerk N durch den Netzwerkzugangsserver 20 basierend auf der im Schritt S5 bestimmten Netzwerkzugangsrestriktion.

In einem weiteren Schritt S7 erfolgt das Verbinden der Netzwerkkomponente 10 mit dem Netzwerk N durch den Netzwerkzugangsserver 20, sobald die konfigurierte Netzwerkverbindung 11' im Schritt S6 verifiziert ist und die konfigurierte Netzwerkverbindung 11' die bestimmten Netzwerkzugangsrestriktionen erfüllt.

In dem Verfahren wird geprüft, ob das von dem Benutzerprofilserver 30 empfangene Benutzerzugangsprofil, welches die Art der Netzwerkverbindung zu dem Netzwerk N und die vom Netzbetreiber konfigurierten Beschränkungen der Netzwerkverbindung beschreibt, die mit dem erweiterten Netzwerkzugangskennzeichen empfangenen Netzwerkzugangsrestriktion erfüllt. Hierfür wird auf Basis des vom Benutzerprofilservers 30 empfangenen Benutzerzugangsprofil eine Netzwerkverbindung 11' konfiguriert und verifiziert. Erfüllt die konfigurierte Netzwerkverbindung 11' die von der Netzwerkkomponente 10 signalisierten und vom Netzwerkzugsserver 20 bestimmten Netzwerkzugangsrestriktion, wird die Netzwerkkomponente 10 über die konfigurierte Netzwerkverbindung 11' zu dem Netzwerk N verbunden. Die konfigurierte Netzwerkverbindung erfüllt die durch das Netzwerkzugangskennzeichen signalisierte Netzwerkzugangsrestriktion und entspricht den von der Netzwerkkomponente 10 gestellten Anforderungen an eine eingeschränkte Netzwerkverbindung.

Erfüllt die konfigurierte Netzwerkverbindung nicht die vom Netzwerkzugangsserver 20 bestimmte Netzwerkzugangsrestriktion, wird die Netzwerkkomponente 10 nicht über die konfigurierte Netzwerkverbindung zu dem Netzwerk N verbunden.

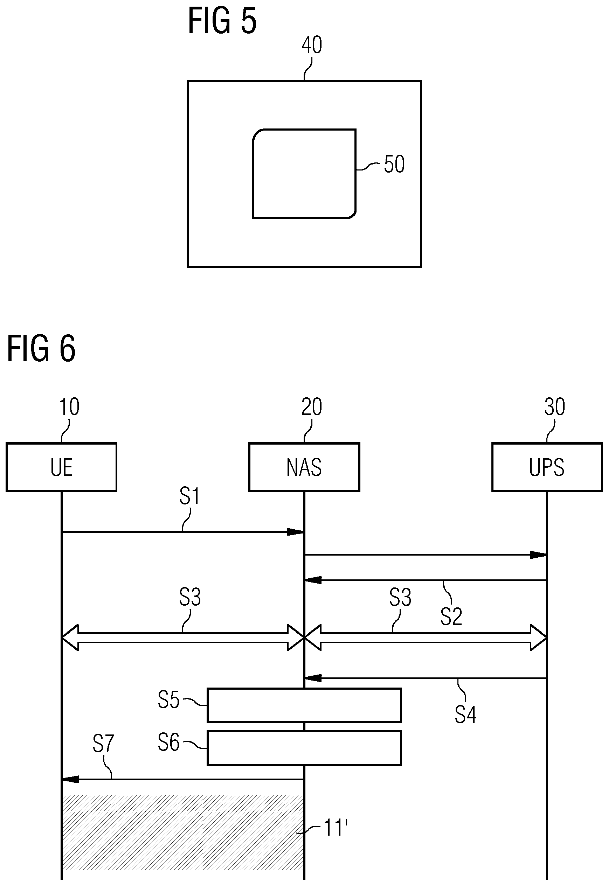

In einer weiteren Ausführungsform erfolgt in einem weiteren Schritt S8 (Fig. 6) das Konfigurieren einer eingeschränkten Netzwerkverbindung 11" der Netzwerkkomponente 10 zum Netzwerk N durch den Netzwerkzugangsserver 20, mittels der Zugangsberechtigungen des Benutzerzugangsprofils und der Netzwerkzugangsrestriktion des empfangenen erweiterten Netzwerkzugangskennzeichens.

Die auf der Basis des vom Benutzerprofilservers 30 empfangenen Benutzerzugangsprofil konfigurierte Netzwerkverbindung 11' wird gemäß der mit dem Netzwerkzugangskennzeichen signalisierten Netzwerkzugangsrestriktion konfiguriert und mit den durch die Netzwerkkomponente 10 geforderten Restriktionen weiter eingeschränkt.

In einem weiteren Schritt S9 (Fig. 6) erfolgt das Verbinden der Netzwerkkomponente 10 mit dem Netzwerk N durch den Netzwerkzugangsserver 20, sobald die eingeschränkte Netzwerkverbindung 11" der Netzwerkkomponente 10 zu dem Netzwerk (N) durch den Netzwerkzugangsserver 20 konfiguriert ist.

Der in Figur 2 dargestellte Netzwerkzugangsserver 20 ist mit einer Netzwerkkomponente 20 und einem Benutzerprofilserver 30 verbunden. Der Netzwerkzugangsserver 20 ist mit dem Netzwerk N verbunden. Erfüllt die konfigurierte Netzwerkverbindung 11' die vom Netzwerkzugangsserver 20 bestimmte Netzwerkzugangsrestriktion, wird die Netzwerkkomponente 10 über die konfigurierte Netzwerkverbindung 11' zum Netzwerk N verbunden, anderenfalls erfolgt keine Verbindung zum Netzwerk N. Die Netzwerkkomponente 10 kann beispielsweise über einen Netzwerkzugangsknoten mit dem Netzwerk N verbunden werden.

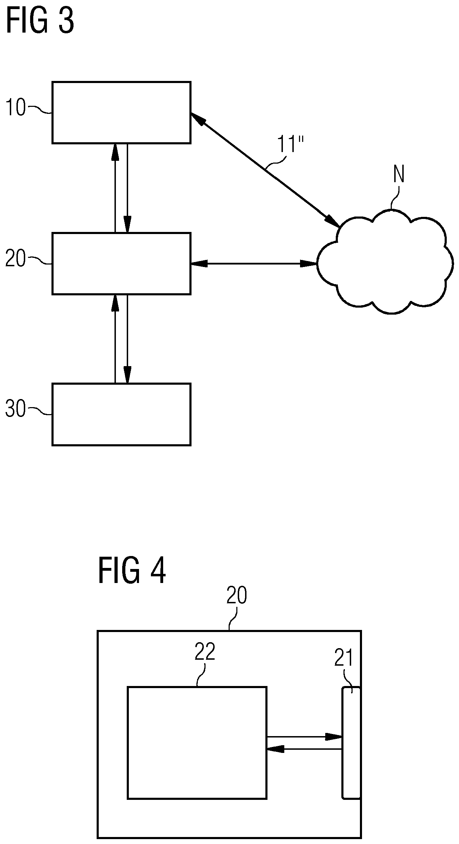

Der in Figur 3 dargestellt Netzwerkzugangsserver 20 ist mit einer Netzwerkkomponente 20 und einem Benutzerprofilserver 30 verbunden. Der Netzwerkzugangsserver 20 ist mit dem Netzwerk N verbunden. Erfüllt die konfigurierte Netzwerkverbindung 11' der Figur 2, nicht die vom Netzwerkzugangsserver 20 bestimmte Netzwerkzugangsrestriktion, kann in einer Ausführungsform der vorliegenden Erfindung eine eingeschränkte Netzwerkverbindung 11" durch den Netzwerkzugangsserver 20 konfiguriert werden. Die eingeschränkte Netzwerkverbindung 11" erfüllt die durch die Netzwerkkomponente 10 geforderte Netzwerkzugangsrestriktion, womit die Netzwerkkomponente 10 mit dem Netzwerk N verbunden wird. Die Netzwerkkomponente 10 kann beispielsweise über einen Netzwerkzugangsknoten mit dem Netzwerk N verbunden werden.

In Figur 4 ist ein Netzwerkzugangsserver 20 mit einer Schnittstelle 21 und einer Prozessoreinheit 22 dargestellt. Die Prozessoreinheit 22 ist eingangsseitig und ausgangsseitig mit der Schnittstelle 21 verbunden. Über die Schnittstelle 21 erfolgt ein Datenaustausch, insbesondere der Empfang des erweiterten Netzwerkzugangskennzeichens von der Netzwerkkomponente 10. Das erweiterte Netzwerkzugangskennzeichen weist wenigstens eine Netzwerkzugangsrestriktion zum Verbinden der Netzwerkkomponente 10 mit dem Netzwerk N auf. Ferner umfasst der Datenaustausch den Empfang eines angeforderten Benutzerzugangsprofils von einem Benutzerprofilserver 30. Das Benutzerzugangsprofil weist Zugangsberechtigungen zum Verbinden der Netzwerkkomponente 10 mit dem Netzwerk N auf. Die Prozessoreinheit 22 ist ausgebildet, die Netzwerkkomponente 10 in dem Netzwerk N zu authentisieren, falls das empfangene erweiterte Netzwerkzugangskennzeichen die Zugangsberechtigungen des empfangenen Benutzerzugangsprofils erfüllt. Des Weiteren ist die Prozessoreinheit 22 ausgebildet, die Netzwerkverbindung der Netzwerkkomponente 10 zu dem Netzwerk N mittels der Zugangsberechtigung des Benutzerzugangsprofils zu konfigurieren, sobald die Netzwerkkomponente 10 authentisiert ist. Zudem ist die mit dem erweiterten Netzwerkzugangskennzeichen wenigstens eine empfangene Netzwerkzugangsrestriktion zu bestimmen. Ferner ist die konfigurierte Netzwerkverbindung der Netzwerkkomponente 10 zu dem Netzwerk N basierend auf der bestimmten Netzwerkzugsrestriktion zu verifizieren und die Netzwerkkomponente 10 mit dem Netzwerk N zu verbinden, sobald die konfigurierte Netzwerkverbindung verifiziert ist.

In einer weiteren Ausführungsform ist die Prozessoreinheit 22 weiter ausgebildet, eine eingeschränkte Netzwerkverbindung 11" der Netzwerkkomponente 10 zu dem Netzwerk N mittels der Zugangsberechtigungen des Benutzerzugangsprofils und der Netzwerkzugangsrestriktion des empfangenen erweiterten Netzwerkzugangskennzeichens zu konfigurieren. Ferner ist die Prozessoreinheit 22 dazu ausgebildet, die Netzwerkkomponente 10 mit dem Netzwerk N zu verbinden, sobald die eingeschränkte Netzwerkverbindung der Netzwerkkomponente 10 zu dem Netzwerk N konfiguriert ist.

In Figur 5 ist ein computerlesbares Speichermedium 40 dargestellt. Das Speichermedium 40 umfasst einen ausführbaren Programmcode 50, der dazu ausgebildet, wenn ausgeführt, das Verfahren gemäß der vorliegenden Erfindung durchzuführen. Mit dem Programmcode 50 wird die Netzwerkkomponente 10 mit einem Netzwerk N, insbesondere einem Mobilfunknetz, verbunden.

Figur 6 zeigt den Ablauf einer ersten Ausführungsform des computerimplementierten Verfahrens zum Verbinden einer Netzwerkkomponente 10 mit einem Netzwerk N, insbesondere einem Mobilfunknetz, unter Verwendung eines erweiterten Netzwerkzugangskennzeichens.

Ein Netzwerkzugangsserver 20, beispielsweise ein Network Access Server (NAS), empfängt in einem ersten Schritt S1 von einer Netzwerkkomponente 10, beispielsweise einem Benutzergerät (User Equipment UE), ein erweitertes Netzwerkzugangskennzeichen umfassend eine Netzwerkzugangsrestriktion und frägt/empfängt in einem zweiten Schritt S2 das Benutzerzugangsprofil einer Netzwerkkomponente 10 von einem Benutzerprofilserver 30, beispielsweise einem User Profile Server (UPS) ab. In einem weiteren Schritt S3 wird die Netzwerkkomponente 10 authentisiert und nach erfolgreicher Authentisierung wird eine Netzwerkverbindung 11' auf Basis des vom Benutzerprofilservers 30 empfangenen Benutzerzugangsprofil in Schritt S4 konfiguriert. In dem Schritt S5 werden die mit dem Netzwerkzugangskennzeichen empfangenen Netzwerkzugangsrestriktion bestimmt und folgend im Schritt S6 wird die konfigurierte Netzwerkverbindung 11' auf Basis der bestimmten Netzwerkzugangsrestriktion verifiziert.

Erfüllt die konfigurierte Netzwerkverbindung 11' die von der Netzwerkkomponente 10 signalisierten und vom Netzwerkzugsserver 20 bestimmten Netzwerkzugangsrestriktion, wird die Netzwerkkomponente 10 über die konfigurierte Netzwerkverbindung 11' mit dem Netzwerk N verbunden.

Die konfigurierte Netzwerkverbindung 11' erfüllt die durch das Netzwerkzugangskennzeichen signalisierte Netzwerkzugangsrestriktion und entspricht den von der Netzwerkkomponente 10 gestellten Anforderungen an eine eingeschränkte Netzwerkverbindung.

Die in dem Netzwerkzugangskennzeichen kodierten Netzwerkzugangsrestriktion einer Netzwerkkomponente 10 können auf der Netzwerkkomponente 10 selbst fest vorgeben sein, beispielsweise in der Firmware der Netzwerkkomponente 10. Dies ist vorteilhaft für sicherheitskritische Netzwerkkomponenten 10, da die Firmware auch nicht versehentlich für eine offene Kommunikation, bzw. eine unbeschränkte Netzwerkverbindung konfiguriert werden kann. Die Firmware kann konfigurierbar sein, d.h. diese kann in einem Konfigurationsspeicher bzw. einem Konfigurationsspeicherbereich der Netzwerkkomponente abgelegt sein. Die Firmware kann ebenfalls auf einem Konfigurationsspeichermodul (C-Plug) oder auf einem Teilnehmerauthentisierungsmodul (5G SIM) abgelegt sein.

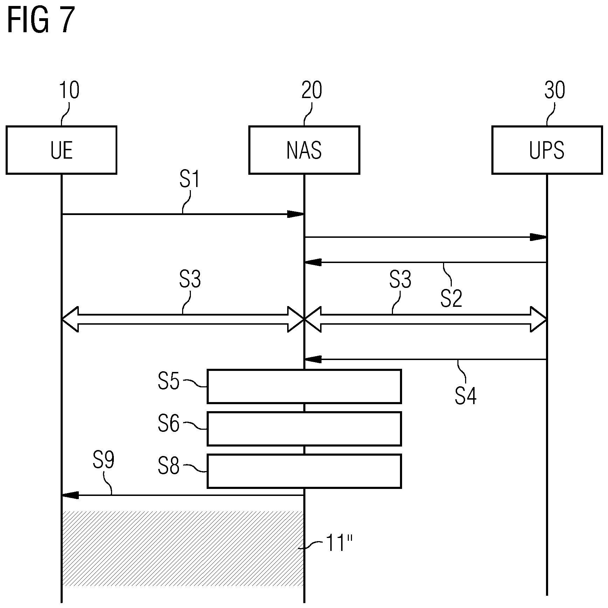

Figur 7 zeigt den Ablauf einer zweiten Ausführungsform des computerimplementierten Verfahrens zum Verbinden einer Netzwerkkomponente 10 mit einem Netzwerk N, insbesondere einem Mobilfunknetz, unter Verwendung eines erweiterten Netzwerkzugangskennzeichens.

Ein Netzwerkzugangsserver 20 empfängt in einem ersten Schritt S1 von einer Netzwerkkomponente 10 ein erweitertes Netzwerkzugangskennzeichen umfassend eine Netzwerkzugangsrestriktion und frägt/empfängt in einem zweiten Schritt S2 das Benutzerzugangsprofil einer Netzwerkkomponente 10 von einem Benutzerprofilserver 30 ab. In einem Schritt S3 wird die Netzwerkkomponente 10 authentisiert und nach erfolgreicher Authentisierung wird eine Netzwerkverbindung 11' auf Basis des vom Benutzerprofilservers 30 empfangenen Benutzerzugangsprofil in Schritt S4 konfiguriert. In dem Schritt S5 werden die mit dem Netzwerkzugangskennzeichen empfangenen Netzwerkzugangsrestriktion bestimmt und folgend im Schritt S6, wird die konfigurierte Netzwerkverbindung auf Basis der bestimmten Netzwerkzugangsrestriktion verifiziert.

Erfüllt die konfigurierte Netzwerkverbindung die von der Netzwerkkomponente 10 signalisierten und vom Netzwerkzugsserver 20 bestimmten Netzwerkzugangsrestriktion, wird die Netzwerkkomponente 10 über die konfigurierte Netzwerkverbindung 11' (Figur 6) zum Netzwerk N verbunden. Die konfigurierte Netzwerkverbindung 11' erfüllt die durch das Netzwerkzugangskennzeichen signalisierte Netzwerkzugangsrestriktion und entspricht den von der Netzwerkkomponente 10 gestellten Anforderungen an eine eingeschränkte Netzwerkverbindung.

Erfüllt die konfigurierte Netzwerkverbindung 11' nicht die vom Netzwerkzugangsserver 20 bestimmte Netzwerkzugangsrestriktion, wird die Netzwerkkomponente 10 nicht über die konfigurierte Netzwerkverbindung 11' zum Netzwerk N verbunden.

In einem weiteren Schritt S8, erfolgt das Konfigurieren einer eingeschränkten Netzwerkverbindung 11" der Netzwerkkomponente 10 zum Netzwerk N durch den Netzwerkzugangsserver 20, mittels der Zugangsberechtigungen des Benutzerzugangsprofils und der Netzwerkzugangsrestriktion des empfangenen erweiterten Netzwerkzugangskennzeichens. Anschließend wird in Schritt S9 die Netzwerkkomponente 10 über eine eingeschränkte Netzwerkverbindung 11" mit dem Netzwerk N gemäß der mit dem erweiterten Netzwerkzugangskennzeichen empfangenen Netzwerkzugangsrestriktion verbunden. Die Netzwerkkomponente 10 erhält einen Netzwerkzugang 11" entsprechend der von der Netzwerkkomponente 10 angeforderten Netzwerkzugangsrestriktion, selbst wenn das vom Benutzerprofilserver 30 empfangene Benutzerzugangsprofil weitere Verbindungs- bzw. Kommunikationsmöglichkeiten mit dem Netzwerk N zulässt.

Im Folgenden sind zwei Beispiele für die Kodierung von einer Netzwerkkomponente 10 geforderten Netzwerkzugangsrestriktion aufgeführt.
- Ein erstes Beispiel für ein Netzwerkzugangskennzeichens mit der geforderten Netzwerkzugangsrestriktion ist:

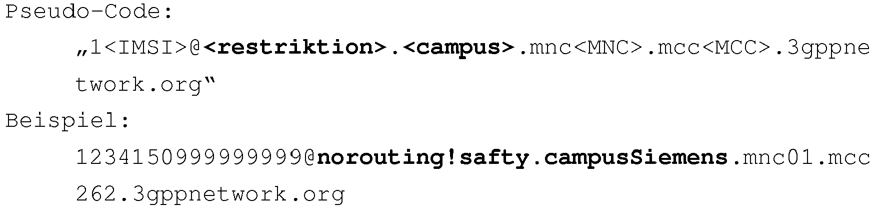

In diesem ersten Beispiel wird durch den Platzhalter "<IMSI>" ein Kennzeichen beschrieben, dass einem Mobilfunkteilnehmer (Teilnehmerkennung) eindeutig zugeordnet ist und das auf einer Sim-Karte abgelegt ist. Durch dieses Kennzeichen ist der Nutzer nach der Anmeldung im Mobilnetz eindeutig identifizierbar.

Durch das dieses Beispiel wird eine Netzwerkkomponente 10 angegeben, die nur mit einem Teilnetz, beispielsweise einem Campus-Netzwerk verbunden werden soll, dass nicht geroutet wird, d.h. mit anderen Teilnetzen verbunden ist und das für eine Sicherheits-Steuerungskommunikation vorgesehen ist.
- Ein zweites Beispiel für ein Netzwerkzugangskennzeichens mit der geforderten Netzwerkzugangsrestriktion ist:

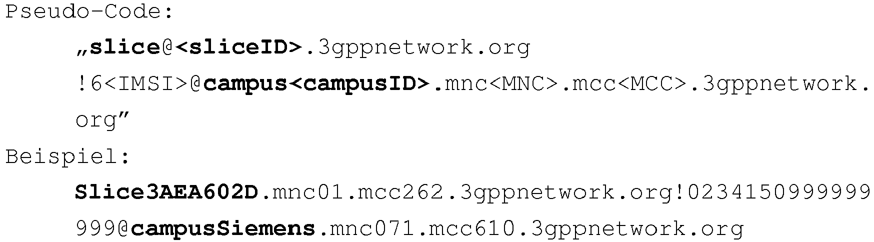

In diesem Beispiel wird kodiert, dass nur mit einem bestimmten Netzwerk-Slice (etwa durch einen hexadezimal codierten 32bit Wert 3AEA602D angegeben) und einem speziellen Campus-Netzwerk (etwa Campus-Netzwerk Siemens) eine Verbindung hergestellt werden soll.

Zusammenfassung betrifft die Erfindung ein computerimplementiertes Verfahren zum Verbinden einer Netzwerkkomponente mit einem Netzwerk, insbesondere einem Mobilfunknetz, mit einem erweiterten Netzwerkzugangskennzeichen. Hierbei erfolgt ein Empfangen des erweiterten Netzwerkzugangskennzeichens von der Netzwerkkomponente durch einen Netzwerkzugangsserver, wobei das erweiterte Netzwerkzugangskennzeichen wenigstens eine Netzwerkzugangsrestriktion zum Verbinden der Netzwerkkomponente mit dem Netzwerk umfasst. Es erfolgt ein Empfangen eines angeforderten Benutzerzugangsprofils von einem Benutzerprofilserver durch den Netzwerkzugangsserver, wobei das Benutzerzugangsprofil Zugangsberechtigungen zum Verbinden der Netzwerkkomponente mit dem Netzwerk umfasst. Es wird die Netzwerkkomponente in dem Netzwerk durch den Netzwerkzugangsserver authentisiert, falls das empfangene erweiterte Netzwerkzugangskennzeichen die Zugangsberechtigungen des empfangenen Benutzerzugangsprofils erfüllt. Zudem wird die Netzwerkverbindung der Netzwerkkomponente zu dem Netzwerk durch den Netzwerkzugangsserver, mittels der Zugangsberechtigungen des Benutzerzugangsprofils konfiguriert, sobald die Netzwerkkomponente authentisiert ist. Es erfolgt das Bestimmen der mit dem erweiterten Netzwerkzugangskennzeichen wenigstens einer empfangenen Netzwerkzugangsrestriktion durch den Netzwerkzugangsserver und ein Verifizieren der konfigurierten Netzwerkverbindung der Netzwerkkomponente zu dem Netzwerk durch den Netzwerkzugangsserver basierend auf der bestimmten Netzwerkzugangsrestriktion. Anschließend wird die Netzwerkkomponente mit dem Netzwerk durch den Netzwerkzugangsserver verbunden, sobald die konfigurierte Netzwerkverbindung verifiziert ist und die konfigurierte Netzwerkverbindung die bestimmten Netzwerkzugangsrestriktionen erfüllt.

## Patentansprüche

1. Computerimplementiertes Verfahren zum Verbinden einer Netzwerkkomponente (10) mit einem Netzwerk (N), insbesondere einem Mobilfunknetz, mit einem erweiterten Netzwerkzugangskennzeichen, umfassend die Schritte:
- Empfangen (S1) des erweiterten Netzwerkzugangskennzeichens von der Netzwerkkomponente (10) durch einen Netzwerkzugangsserver (20), wobei das erweiterte Netzwerkzugangskennzeichen wenigstens eine Netzwerkzugangsrestriktion zum Verbinden der Netzwerkkomponente (10) mit dem Netzwerk (N) umfasst;
Empfangen (S2) eines angeforderten Benutzerzugangsprofils von einem Benutzerprofilserver (30) durch den Netzwerkzugangsserver (20), wobei das Benutzerzugangsprofil Zugangsberechtigungen zum Verbinden der Netzwerkkomponente (10) mit dem Netzwerk (N) umfasst;
Authentisieren (S3) der Netzwerkkomponente (10) in dem Netzwerk (N) durch den Netzwerkzugangsserver (20), falls das empfangene erweiterte Netzwerkzugangskennzeichen die Zugangsberechtigungen des empfangenen Benutzerzugangsprofils erfüllt;
Konfigurieren (S4) der Netzwerkverbindung (11') der Netzwerkkomponente (10) zu dem Netzwerk (N) durch den Netzwerkzugangsserver (20), mittels der Zugangsberechtigungen des Benutzerzugangsprofils, sobald die Netzwerkkomponente (10) authentisiert ist;
Bestimmen (S5) der mit dem erweiterten Netzwerkzugangskennzeichen empfangenen Netzwerkzugangsrestriktion durch den Netzwerkzugangsserver (20);
Verifizieren (S6) der konfigurierten Netzwerkverbindung der Netzwerkkomponente (10) zu dem Netzwerk (N) durch den Netzwerkzugangsserver (20) basierend auf der bestimmten Netzwerkzugangsrestriktion;
Verbinden (S7) der Netzwerkkomponente (10) mit dem Netzwerk (N) durch den Netzwerkzugangsserver (20), sobald die konfigurierte Netzwerkverbindung verifiziert ist und die konfigurierte Netzwerkverbindung (11') die bestimmten Netzwerkzugangsrestriktionen erfüllt.

2. Verfahren gemäß Anspruch 1, umfassend die Schritte:
- Konfigurieren (S8) einer eingeschränkten Netzwerkverbindung (11") der Netzwerkkomponente (10) zu dem Netzwerk (N) durch den Netzwerkzugangsserver (20), mittels der Zugangsberechtigungen des Benutzerzugangsprofils und der Netzwerkzugangsrestriktion des empfangenen erweiterten Netzwerkzugangskennzeichens;
- Verbinden (S9) der Netzwerkkomponente (10) mit dem Netzwerk (N) durch den Netzwerkzugangsserver (20), sobald die eingeschränkte Netzwerkverbindung (11") der Netzwerkkomponente (10) zu dem Netzwerk (N) durch den Netzwerkzugangsserver (20) konfiguriert wird.

3. Verfahren gemäß zumindest einem der vorhergehenden Ansprüche 1 und 2, wobei die Netzwerkzugangsrestriktion ein Identifikationsmerkmal für das Verbinden der Netzwerkkomponente (10) mit einem Netzwerk-Slice in dem Netzwerk (N) umfasst.

4. Verfahren gemäß Anspruch 3, wobei der Netzwerk-Slice einen Betriebszustand aufweist.

5. Verfahren gemäß zumindest einem der vorhergehenden Ansprüche 1 bis 4, wobei die Netzwerkzugangsrestriktion ein Identifikationsmerkmal zum Verbinden der Netzwerkkomponente (10) mit einem Teilnetzwerk des Netzwerk-Slice in dem Netzwerk (N) umfasst.

6. Verfahren gemäß zumindest einem der vorhergehenden Ansprüche 1 bis 5, wobei die Netzwerkzugangsrestriktion ein Identifikationsmerkmal zum Verbinden der Netzwerkkomponente (10) mit einer Netzwerk-Zone in dem Netzwerk (N) umfasst.

7. Verfahren gemäß zumindest einem der vorhergehenden Ansprüche 3 bis 5, wobei die Netzwerkzugangsrestriktion einen Betriebszustand eines Netzwerk-Slice oder eines Teilnetzwerks des Netzwerk-Slice umfasst.

8. Verfahren gemäß zumindest einem der vorhergehenden Ansprüche 1 bis 7, wobei die Netzwerkzugangsrestriktion einen kryptografischen Schutz umfasst.

9. Verfahren gemäß Anspruch 1, wobei das Netzwerkzugangskennzeichen ein zweistufiges Netzwerkzugangskennzeichen ist.

10. Verfahren gemäß Anspruch 9, wobei das zweistufige Netzwerkzugangskennzeichen, in einer ersten Stufe eine Netzwerkzugangsrestriktion und in einer zweiten Stufe eine weitere Netzwerkzugangsrestriktion umfasst.

11. Netzwerkzugangsserver (20) zum Konfigurieren einer Netzwerkverbindung zum Verbinden einer Netzwerkkomponente (10) mit einem Netzwerk (N), insbesondere einem Mobilfunknetz, mit einem erweiterten Netzwerkzugangskennzeichen, umfassend
- zumindest eine Schnittstelle (21), welche dazu ausgebildet ist, das erweiterte Netzwerkzugangskennzeichen von einer Netzwerkkomponente (10) und ein Benutzerzugangsprofil von einem Zugangsprofilserver (30) zu empfangen, wobei das erweiterte Netzwerkzugangskennzeichen wenigstens eine Netzwerkzugangsrestriktion für das Verbinden der Netzwerkkomponente (10) mit dem Netzwerk (N) umfasst und wobei das Netzwerkzugangsprofil Zugangsberechtigungen zum Verbinden der Netzwerkkomponente (10) mit dem Netzwerk (N) umfasst;
- zumindest eine Prozessoreinheit (22), welche dazu ausgebildet ist,
die Netzwerkkomponente (10) in dem Netzwerk (N) zu authentisieren, falls das empfangene erweiterte Netzwerkzugangskennzeichen die Zugangsberechtigungen des empfangenen Benutzerzugangsprofils erfüllt, die Netzwerkverbindung (11') der Netzwerkkomponente (10) zu dem Netzwerk (N) mittels der Zugangsberechtigung des Benutzerzugangsprofils zu konfigurieren, sobald die Netzwerkkomponente (10) authentisiert ist,
die mit dem erweiterten Netzwerkzugangskennzeichen wenigstens eine empfangene Netzwerkzugangsrestriktion zu bestimmen,
die konfigurierte Netzwerkverbindung (11') der Netzwerkkomponente (10) zu dem Netzwerk (N) basierend auf der bestimmten Netzwerkzugsrestriktion zu verifizieren,
die Netzwerkkomponente (10) mit dem Netzwerk (N) zu verbinden, sobald die konfigurierte Netzwerkverbindung (11') verifiziert ist.

12. Netzwerkzugangsserver (20) gemäß Anspruch 11, wobei die Prozessoreinheit (22) weiter ausgebildet ist,
eine eingeschränkte Netzwerkverbindung (11") der Netzwerkkomponente (10) zu dem Netzwerk (N) mittels der Zugangsberechtigungen des Benutzerzugangsprofils und der Netzwerkzugangsrestriktion des empfangenen erweiterten Netzwerkzugangskennzeichens zu konfigurieren,
die Netzwerkkomponente (10) mit dem Netzwerk (N) zu verbinden, sobald die eingeschränkte Netzwerkverbindung (11") der Netzwerkkomponente (10) zu dem Netzwerk (N) konfiguriert ist.

13. Verwendung eines Netzwerkzugangsservers (20) gemäß zumindest einem der Ansprüche 11 bis 12, insbesondere geeignet zur Durchführung eines Verfahrens gemäß zumindest einem der Ansprüche 1 bis 10, zum Verbinden einer Netzwerkkomponente (10) mit einem Netzwerk (N).

14. Computerprogrammprodukt mit einem auf einem maschinenlesbaren Träger (40) gespeicherten Programmcode (50) zur Durchführung eines Verfahrens gemäß zumindest einem der Ansprüche 1 bis 10, wenn das Programm auf einem Rechner abläuft.
